# EUROPÄISCHE PATENTSCHRIFT

(11) **EP 3 127 672 B1**
(45) Veröffentlichungstag und Bekanntmachung des Hinweises auf die Patenterteilung: **04.04.2018**
(21) Anmeldenummer: 15180182.6
(22) Anmeldetag: 07.08.2015
(51) Int. Cl.: B28D 1/04, B23B 51/04, E21B 10/573

(54) **SCHNEIDEINSATZ FÜR EIN WERKZEUG**
CUTTING INSERT FOR A TOOL
INSERT DE COUPE POUR UN OUTIL

(43) Veröffentlichungstag der Anmeldung: 08.02.2017
(73) Patentinhaber: HILTI Aktiengesellschaft, 9494 Schaan (LI)
(72) Erfinder: Janczak-Rusch, Jolanta, 8052 Zürich (CH); Moszner, Frank, 8055 Zürich (CH); Jeurgens, Lars, 8404 Winterthur (CH); Moseley, Steven, 6820 Nenzing-Gurtis (AT); Surberg, Cord-Henrik, 6800 Feldkirch (AT)
(74) Vertreter: Hilti Aktiengesellschaft Corporate Intellectual Property

(56) Entgegenhaltungen:
- EP-A1- 2 105 574
- DE-A1-102004 050 033

## Beschreibung

### GEBIET DER ERFINDUNG

Die vorliegende Erfindung betrifft einen Schneideinsatz für ein Werkzeug, wie z.B. eine diamantbesetzte Kernbohrkrone.

Aufgrund ihrer hohen Härte sind polykristalline Diamanten für die Bearbeitung von harten und/oder zähen Materialien, insbesondere von Gestein und armierten mineralischen Bauwerkstoffen gewünscht. Der polykristalline Diamant wird typischerweise auf einem Träger aus gesintertem Hartmetall hergestellt. Das Hartmetall hat eine metallische Matrix aus Kobalt und Körner aus Wolframkarbid. Das Hartmetall lässt sich jedoch nur schlecht auf andere Materialen löten oder schweißen. Als Randbedingung darf eine Temperatur von 750 °C nicht oder nur kurzzeitig überschritten werden, da sonst die Kobalt-haltige Matrix den polykristallinen Diamant katalytisch zersetzt. Die DE 10 2004 050 033 A1 offenbart einen Schneideinsatz gemäß dem Oberbegriff des Anspruchs 1 und implizit ein Verfahren gemäß dem Oberbegriff des Anspruchs 11.

### OFFENBARUNG DER ERFINDUNG

Der erfindungsgemäße Schneideinsatz für ein Werkzeug hat einen Träger aus einem gesinterten Hartmetall und eine Schneidplatte, die einen Grundkörper aus einem gesinterten Hartmetall und an einer Schneidfläche des Grundkörpers polykristallinen Diamant aufweist. Ein Lot bindet den Grundkörper der Schneidplatte an den Träger an, wobei das Lot eine Sequenz von Doppelschichten aus jeweils einer Kupfer-basierten Schicht und Wolfram-basierten Schicht aufweist und die Anzahl der Doppelschichten der Sequenz größer als Zwanzig ist.

Das Lot erreicht eine ausreichende Benetzung des Hartmetalls bei einer Temperatur unterhalb von 750 °C, um die Schneidplatte auf dem Träger zu fügen. Die Abfolge von Kupfer und Wolfram sorgt für eine schnelle Reaktionskinetik und ein Absenken der Schmelztemperatur des Kupfers und ermöglicht das Löten von Hartmetallen unterhalb von 750°C. Vorzugsweise sind die Schichten dünner als 20 nm.

Eine Ausgestaltung sieht vor, dass das Lot wenigstens zwei der Sequenzen aufweist und zwischen den Sequenzen eine Zwischenschicht aus Silber, Kupfer oder Nickel oder einer Legierung basierend auf Silber, Kupfer oder Nickel angeordnet ist. Die drei Metalle machen zusammen wenigstens 75 Gew.-% der Legierung aus, d.h. andere Legierungsanteile haben zusammen einen Gewichtsanteil von weniger als 25 Gew.-%.

Eine Ausgestaltung sieht vor, dass eine Titan-basierte oder Wolfram-basierte Deckschicht zwischen einem der Hartmetalle und der Sequenz vorgesehen ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Kernbohrmaschine
- Fig. 2: ein Frontalansicht einer Kernbohrkrone,
- Fig. 3: einen Schneideinsatz
- Fig. 4: schematische Darstellung einer Fügezone des Schneideinsatzs
- Fig. 5: Rasterelektronenmikroskopaufnahme eines Lots in der Fügezone nach Abscheiden
- Fig. 6: Rasterelektronenmikroskopaufnahme des Lots nach Aufheizen
Gleiche oder funktionsgleiche Elemente werden durch gleiche Bezugszeichen in den Figuren indiziert, soweit nicht anders angegeben.

### AUSFÜHRUNGSFORMEN DER ERFINDUNG

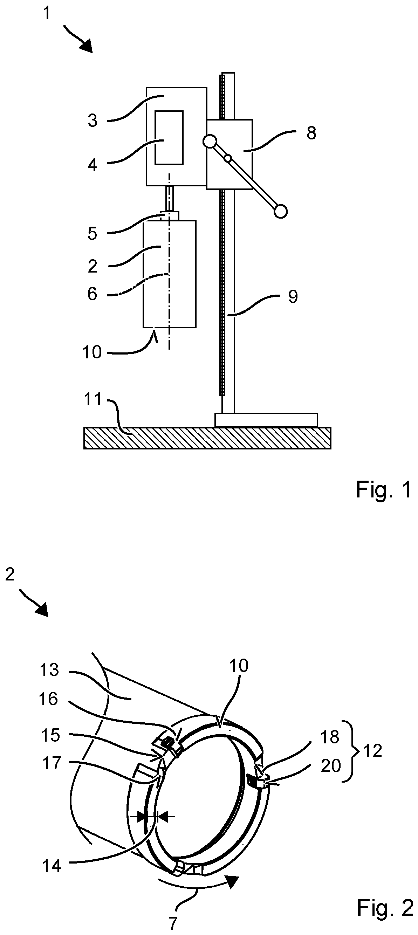

Fig. 1 zeigt beispielhaft eine ständergeführte Kernbohrmaschine **1** mit einer Kernbohrkrone **2.** Die Kernbohrmaschine **1** hat eine Antriebseinheit **3** mit einem Motor **4.** Die Antriebseinheit **3** kann neben dem Motor **4** unter Anderem ein Getriebe und eine Sicherheitskupplung enthalten. Der Anwender kann den Motor **4** durch einen Betriebsschalter einschalten und ausschalten. Die Antriebseinheit **3** dreht einen Werkzeughalter **5** um eine Arbeitsachse **6.** Die Kernbohrkrone **2** kann, koaxial zu der Arbeitsachse **6** ausgerichtet, in den Werkzeughalter **5** eingehängt und verriegelt werden. Der Werkzeughalter **5** überträgt das Drehmoment der Antriebseinheit **3** auf die Kernbohrkrone **2,** welche sich somit um die Arbeitsachse **6** in einer Umlaufrichtung **7** dreht. Die Antriebseinheit **3** ist an einem Schlitten **8** aufgehängt, der parallel zu der Arbeitsachse **6** entlang einer Ständers **9** verfahrbar ist. Beispielsweise kann der Anwender mittels einer Kurbel den Schlitten **8** verschieben, alternativ kann ein Motor mit geeigneter Steuerung den Schlitten **8** bewegen. Die schneidende Stirnfläche **10** der Kernbohrkrone **2** wird mit einem konstanten Anpressdruck an einen zu bearbeitenden Untergrund **11** angepresst. Die Kernbohrkrone **2** hat mehrere in die Stirnfläche **10** eingesetzte diamanthaltige Schneideinsätze **12,** die einen kreisförmigen Schlitz in den Untergrund **11** schneiden. Die diamanthaltigen Schneideinsätze **12** sind für die Bearbeitung von mineralischen Bauwerkstoffen, insbesondere für stahlarmierten Beton, ausgelegt.

Fig. 2 zeigt eine beispielhafte Stirnfläche **10** der Kernbohrkrone **2.** Die Kernbohrkrone **2** hat ein zylindrisches Rohr **13,** das in der ringförmigen Stirnfläche **10** endet. Der Durchmesser des Rohrs **13** und der Stirnfläche **10** variiert nach Anwendungsgebiet. Typische Durchmesser liegen im Bereich von 5 cm bis 1 m. Die Wandstärke **14** des Rohrs **13** liegt typischerweise zwischen 4 mm und 8 mm.

Die Stirnfläche **10** ist durch mehrere in Umlaufrichtung **7** angeordneten Aussparungen **15** unterbrochen. Die Aussparungen **15** haben in Umlaufrichtung **7** aufeinanderfolgend eine von der Stirnfläche **10** abfallende, steile Flanke **16** und eine zu der Stirnfläche **10** hin ansteigende, flache Flanke **17.** Die steile Flanke **16** ist beispielsweise parallel oder um weniger als 10 Gad zu der Arbeitsachse **6** geneigt. Die flache Flanke **17** verläuft mit einer mittleren Steigung von weniger als 45 Grad, z.B. von mehr als 30 Grad, und vorzugsweise wenigstens 10 Grad von der steilen Flanke **16** bis zu der Stirnfläche **10.**

Der Schneideinsatz **12** ist in die Aussparung **15** eingesetzt. Die Schneidfläche **18** der Schneideinsätze **12** weist in die Umlaufrichtung **7,** vorzugsweise ist die Schneidfläche **18** senkrecht zu der Umlaufrichtung **7** orientiert. Der Schneideinsatz **12** hat einen weitgehend prismatischen Aufbau, d.h. eine Rückseite **19** des Schneideinsatzes **12** hat die gleiche oder eine geringfügig kleinere Fläche wie die Schneidfläche **18.** Die umlaufende Mantelfläche **20** des Schneideinsatzes **12** ist senkrecht oder näherungsweise senkrecht zu der Schneidfläche **18.** Die Mantelfläche **20** des beispielhaften Schneideinsatzes **12** ist um wenigstens 75 Grad, vorzugsweise wenigstens 80 Grad, beispielsweise höchstens 85 Grad, gegenüber der Schneidfläche **18** geneigt.

Die Rückseite **19** des Schneideinsatzes **12** liegt flächig an der steilen Flanke **16** der Aussparung **15** an. Der Schneideinsatz **12** liegt vorzugsweise mit wenigstens 75 % seiner Rückseite **19** an dem Rohr **13** an, um den Schneideinsatz **12** bei einwirkenden Stöße während des Bearbeitens von Bauwerkstoffen, insbesondere beim plötzlichen Eingreifen in Armierungseisen, abzustützen. Die Rückseite **19** kann mit dem Rohr **13** verlötet oder verschweißt sein. Die in Umlaufrichtung **7** weisende Schneidfläche **18** liegt weitgehend frei. die Schneidfläche **18** enthält polykristallinen Diamant **21.** Die flache Flanke **16** und die Schneidfläche **18** begrenzen einen Volumen, das gegenüber der Stirnfläche **10** zurückgesetzt ist. Die Schneidplatte **22** steht läng der Arbeitsachse **6** über die Stirnfläche **10** hinaus. Der axiale Überstand liegt im Bereich von 0,1 mm bis 1 mm. Eine Breite des Schneideinsatzes **12** kann größer als die Wandstärke **14** des Rohrs **13** sein, wodurch der Schneideinsatz **12** in radialer Richtung, vorzugsweise nach innen zu der Arbeitsachse **6** und nach außen von der Arbeitsachse **6** weg, übersteht. Der radiale Überstand liegt vorzugsweise im Bereich zwischen 0,1 mm und 0,5 mm.

Der Schneideinsatz **12** beinhaltet einen Träger **24,** der die mit dem Stahl verschweißbare oder auf den Stahl auflötbare Rückseite **19** bildet. Der Träger **24** ist aus einem gesinterten Hartmetall gefertigt. Das bevorzugte Hartmetall für den Träger **24** beinhaltet Körner aus Wolframkarbid, welche in einer metallischen Matrix aus einer Kobalt-basierten, Nickelbasierten oder Eisen-basierten Legierung eingebettet sind. Die Körner sind von einem ultrafeinen oder submicro Grad; die mittlere Korngröße liegt etwa zwischen 0,2 µm und 1,0 µm. Der Gewichtsanteil der Körner liegt vorzugsweise im Bereich zwischen 80 Gewichtsprozent (Gew.-%) und 90 Gew.-%, um eine gute Schweißbarkeit des Trägers **24** und hohe mechanische Verschleißbeständigkeit zu erhalten. Die Körner des Hartmetalls können neben oder anstelle von Wolframkarbid aus anderen Karbiden und/oder Karbonitriden von Übergangsmetallen der Gruppe IV, Gruppe V und der Gruppe VI des chemischen Periodensystems bestehen. Insbesondere können dem Wolframkarbid Körner aus Titannitrid, Titankarbonitrid, Tantalkarbid beigemengt sein, die sich durch ihre hohe Härte auszeichnen.

Der Schneideinsatz **12** beinhaltet eine Schneidplatte **22,** die die Schneidfläche **18** mit dem polykristallinen Diamant **21** aufweist. Die Schneidplatte **22** hat einen Grundkörper **25** aus einem gesinterten Hartmetall auf den der polykristalline Diamant **21** aufgesintert ist. Das Hartmetall hat eine metallische Matrix aus Kobalt, in welcher Körner aus Wolframkarbid eingebettet sind. Kobalt hat vorzugsweise einen Anteil von 10 Gew.-% bis 15 Gew.-%. Die Körner können den verbleibenden Gewichtsanteil zwischen 85 Gew.-% und 90 Gew.-% bilden. Die Körner haben eine mittlere Größe im Bereich zwischen 2 µm bis 5 µm. Der polykristalline Diamant **21** ist an der Schneidfläche **18** der Schneidplatte **22** aufgesintert. Die polykristallinen Diamanten bilden die Schneidfläche **18** und können teilweise von der Kobaltmatrix eingefasst sein.

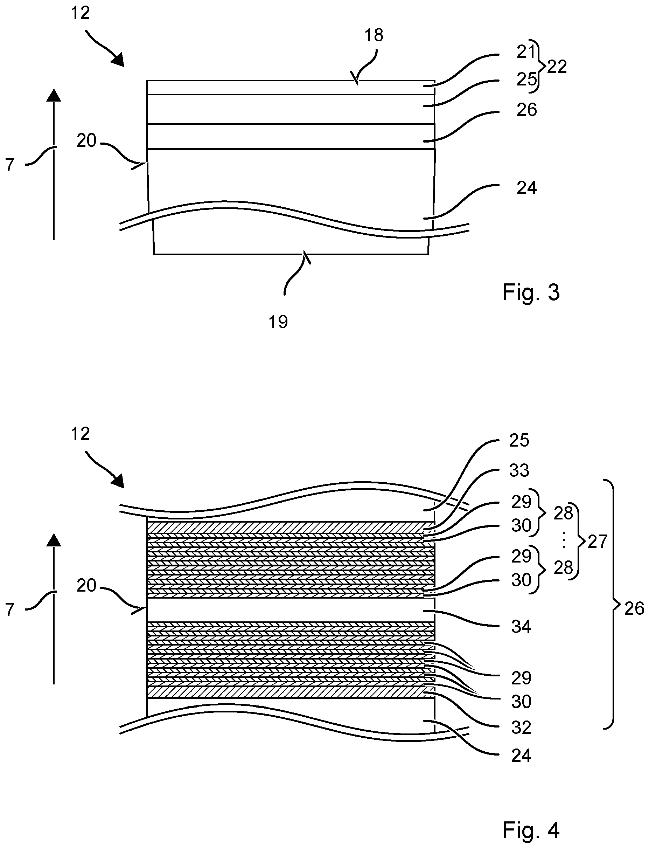

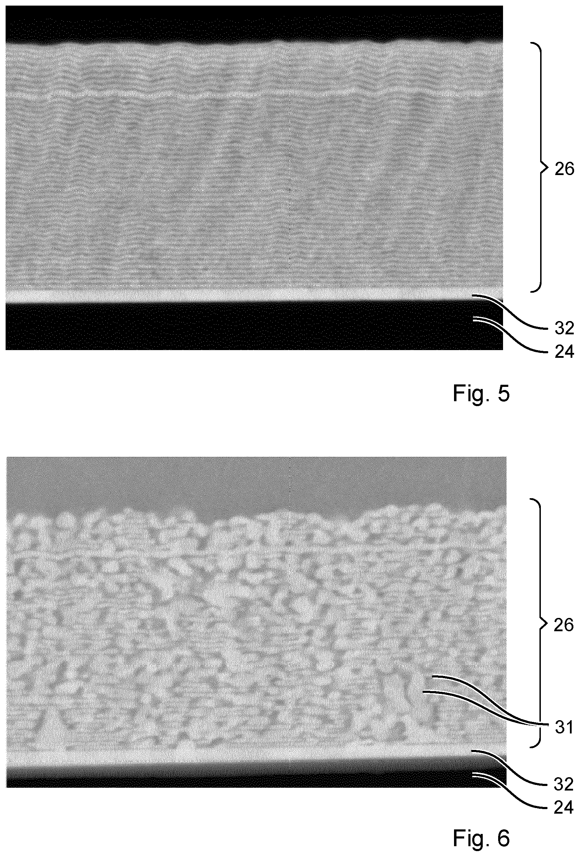

Die Schneidplatte **22** ist auf den Träger **24** aufgelötet. Das Lot **26** basiert auf einer Sequenz **27** von Doppelschichten **28,** welche in Fig. 4 schematisch illustriert und in einer Rasterelektronenmikroskopaufnahme Fig. 5 dargestellt sind. Die Doppelschicht **28** enthält eine Kupfer-basierte Schicht **29** und eine Wolfram-basierte Schicht **30.** Die Kupfer-basierte Schicht **29** ist zwischen 1 nm und 20 nm dick, beispielsweise wenigstens 3 nm, wenigstens 5 nm, höchstens 10 nm, höchstens 7 nm stark. Die Wolfram-basierte Schicht **30** ist zwischen 1 nm und 20 nm dick, beispielsweise wenigstens 3 nm, wenigstens 5 nm, höchstens 10 nm, höchstens 7 nm stark. Die Wolfram-basierte Schicht **30** ist gleich dick oder dünner wie die Kupfer-basierte Schicht **29.** Die Anzahl der Doppelschichten **28** in der Sequenz **27** ist größer als 20 und geringer als 500, beispielsweise wiederholt sich die Doppelschicht **28** wenigstens 50-fach, wenigstens 100-fach, höchstens 300-fach, höchstens 200-fach, höchstens 100-fach. Die Kupfer-basierte Schicht **29** und die Wolfram-basierte Schicht **30** folgen unmittelbar und alternierend aufeinander. Der Anteil von Kupfer an der Kupfer-basierten Schicht **29** ist größer als 50 Gew.-%, vorzugsweise größer als 75 Gew.-%, beispielsweise größer 95 Gew.-%, gleich 100 Gew.-%. Der Anteil von Wolfram an der Wolfram-basierten Schicht **30** ist größer als 50 Gew.-%, vorzugsweise größer als 75 Gew.-%, beispielsweise größer 95 Gew.-%, gleich 100 Gew.-%.

Die Kupfer-basierte Schicht **29** hat einen niedrigeren Schmelzpunkt als die Wolfram-basierte Schicht **30.** Der Schmelzpunkt der Kupfer-basierten Schicht **29** ist durch die geringere Schichtdicke gegenüber dem Schmelzpunkt (1085 °C) eines massiven Kupferblocks abgesenkt. Die dünnen Kupfer-basierten Schichten **29** haben bereits bei einer Temperatur zwischen 650 °C und 750 °C, vorzugsweise unterhalb von 680 °C, eine ausreichend flüssige Phase, um die Hartmetalle des Trägers **24** und der Schneidplatte **22** zu benetzen und als Lot **26** die Hartmetalle materialschlüssig zu verbinden. Eine Lötverbindung wird innerhalb von 30 min erreicht. Die Wolfram-basierte Schicht **30** schmilzt nicht und bleibt weitgehend intakt. Das Kupfer durchdringt die Wolfram-basierte Schicht **30,** insbesondere im Bereich von Fehlstellen. Die Abscheidung der dünnen Schichten begünstigt das Ausbilden von Fehlstellen der jeweiligen Kristalle von Kupfer und Wolfram. Das Kupfer bildet in den Wolfram-basierten Schichten **30** nach dem Aufheizen Inseln **31** aus, welche die benachbarten Kupfer-basierten Schichten **29** verbinden (Fig. 6). Das Kupfer bindet die Hartmetalle aneinander an.

Der Grundkörper **25** kann mit einer Wolfram-basierten oder Titan-basierten Deckschicht **32** aus benetzt sein. Die Deckschicht **32** ist vorzugsweise dicker als 5 nm, beispielsweise dicker als 25 nm, dicker als 50 nm. Der Träger **24** kann ebenfalls mit einer Wolfram-basierten oder Titan-basierten Deckschicht **33** benetzt sein. Der Gewichtsanteil von Wolfram bzw. Titan ist größer als 50 Gew.-%, vorzugsweise größer als 75 Gew.-% z.B. größer 95 Gew.-%.

Das Lot **26** kann aus mehreren Sequenzen **27** der Doppelschichten **28** zusammengesetzt sein. Jede der Sequenzen **27** weist eine Anzahl von Doppelschichten **28** auf. Die Anzahl der Doppelschichten **28** ist größer als 20 und geringer als 250, beispielsweise wiederholt sich die Doppelschicht **28** wenigstens 50-fach, wenigstens 100-fach, höchstens 150-fach. Die Doppelschicht **28** enthält eine Kupfer-haltige Schicht **29** und eine Wolfram-haltige Schicht **30.** Die Dicke und Zusammensetzung der einzelnen Schichten **30** ist von der Zahl der Sequenzen **27** unabhängig und gleich wie oben beschrieben. Eine Zwischenschicht **34** ist zwischen den benachbarten Sequenzen **27** vorgesehen. Die Zwischenschicht **34** besteht vorzugsweise aus einer Legierung, die hauptsächlich aus Silber, Kupfer, Nickel oder einer Mischung von zweien oder dreien der Metalle Silber, Kuper, Nickel besteht. Andere Beimischung haben einen Anteil von weniger als 25 Gew.-%. Die Zwischenschicht **34** ist zwischen 5 nm und 100 nm dick, beispielsweise bis 25 nm dick. Beispiele für die Legierungen sind Silber-Kupfer-Legierung, welche z.B. unter dem Namen InCuSil bekannt sind.

Die Darstellung in Fig. 4 ist rein symbolischer Darstellung und gibt weder die relativen Abmessungen, Anzahl, noch wieder, welche der beiden Schichten der Doppelschicht **28** an Deckschichten **32, 33** oder Zwischenschicht **34** angrenzen.

### Beispiele

Mehrere beispielhafte Lote gemäß obiger Zusammensetzung verbinden zur Evaluierung zwei Plättchen aus Hartmetall. Die Plättchen haben jeweils eine quadratische Fügefläche von 25 mm². Der metallische Binder ist Kobalt und hat einen Anteil von 12 Gew.-%. Die Körner sind aus Wolframkarbid und weisen eine mittlere Korngröße von 2 µm auf. Die Plättchen sind bei einer Temperatur von 680 °C und für 30 min mit den beispielhaften Loten gefügt. Ein Schertest bestimmt die maximale Kraft, welche längs der Fügefläche zu einem Reißen der Lotverbindung führt. Der Schertest ist bei Raumtemperatur durchgeführt.

Für das erste beispielhafte Lot Ex1 wird auf das erste Plättchen und auf das zweite Plättchen eine Deckschicht aus Wolfram aufgesputtert. Die Dicke der Deckschichten ist etwa 25 nm. Auf die beiden Deckschichten wird jeweils eine Sequenz aus Doppelschichten mittels eines Sputterverfahrens abgeschieden. Das verwendete Sputterverfahren ist ein Magnetronsputtern. Vorzugsweise werden für die Abscheidung des Kupfers Reaktionsbedingungen geschaffen, die eine hohe Zahl an Kristallfehler erzeugt. Beispielsweise kann ein Bias angelegt werden. Die Doppelschicht enthält eine 5 nm dicke Schicht aus reinem Kupfer und eine 5 nm dicke Schicht aus reinem Wolfram. Beide Sequenzen bestehen jeweils aus 100 Doppelschichten. Auf die Sequenzen wird eine Zwischenschicht aus einer Kupfer-Silber-basierte Legierung aufgebracht. Die Legierung enthält 29 % Kupfer und 44 % Silber. Die Plättchen werden mit den Lotschichten einander zugewandt aufeinander gesetzt und bei einer Temperatur von 680°C für 30 min miteinander verbunden. Die Scherfestigkeit liegt für das Lot Ex1 bei 260 MPa.

Das zweite beispielhafte Lot Ex2 unterscheidet sind von dem ersten Lot Ex1 in der Zusammensetzung der Doppelschichten. Die Doppelschicht enthält eine 7 nm dicke Schicht aus reinem Kupfer und eine 3 nm dicke Schicht aus reinem Wolfram. Die Anzahl der Doppelschichten ist wie bei dem ersten Lot Ex1 jeweils 100 in beiden Sequenzen. Die Zusammensetzung der Zwischenschicht ist gleich wie in dem Beispiel Ex1. Ein Schertest bei Raumtemperatur ergibt eine Scherfestigkeit von 315 MPa.

Das dritte beispielhafte Lot Ex3 unterscheidet sich von dem ersten Lot Ex1 in der Zusammensetzung der Deckschichten, welche eine Bronzeschicht enthalten. Die Kupfer und Zinn-haltige Bronzeschicht hat eine Dicke von 70 nm. Die Zusammensetzung der Sequenzen ist wie in Beispiel Ex1. Die Scherfestigkeit bei Raumtemperatur liegt bei 300 MPa.

Ein Vergleichsbeispiel Ex4 für das Lot ist ohne die Sequenzen aus den Kupfer-Wolfram Doppelschichten aufgebaut. Auf die Plättchen ist die Zwischenschicht aus der Legierung wie in Beispiel Ex1 aufbracht. Ein Schertest ergibt eine Scherfestigkeit von 216 MPa, welche deutlich unter der Festigkeit der obigen Beispiele Ex1 bis Ex3 liegt.

Ein qualitatives Beispiel Ex5 hat die gleichen Deckschichten und Sequenzen der Doppelschichten wie Beispiel Ex1. Es ist jedoch keine Zwischenschicht vorgesehen, die beiden Sequenzen grenzen direkt aneinander. Ähnliche Festigkeitswerte wie bei Beispiel Ex1 werden erwartet.

Ein weiteres qualitatives Beispiel Ex6 hat 25 nm dicke Deckschichten aus Titan. Die jeweiligen Sequenzen enthalten 50 Doppelschichten aus 5 nm dickem Kupfer und 5 nm dickem Wolfram. Eine Zwischenschicht aus einer 25 nm dicken Schicht aus Silber ist auf eine der Sequenzen **27** aufgebracht. Ähnliche Festigkeitswerte wie bei Beispiel Ex1 werden erwartet.

Ein weiteres qualitatives Beispiel Ex7 hat 25 nm dicke Deckschichten aus Wolfram. Die Sequenzen **27** haben 150 Doppelschichten aus 5 nm dickem Kupfer und 5 nm dickem Wolfram. Eine Zwischenschicht aus der Legierung von Beispiel Ex1 ist aufgebracht. Ähnliche Festigkeitswerte wie bei Beispiel Ex1 werden erwartet.

## Patentansprüche

1. Schneideinsatz, insbesondere für ein drehendes Werkzeug, mit einem Träger (24) aus einem gesinterten Hartmetall;
einer Schneidplatte (22), die einen Grundkörper (25) aus einem gesinterten Hartmetall und an einer Schneidfläche (18) des Grundkörpers polykristallinen Diamant (21) aufweist, **gekennzeichnet durch** ein Lot, das den Grundkörper (25) der Schneidplatte (22) an den Träger (24) anbindet, wobei das Lot (26) eine Sequenz (27) von Doppelschichten (28) aus jeweils einer Kupfer-basierten Schicht (29) und Wolfram-basierten Schicht (30) aufweist und die Anzahl der Doppelschichten (28) größer als Zwanzig ist.

2. Schneideinsatz nach Anspruch 1, **dadurch gekennzeichnet, dass** die Kupfer-basierte Schicht (29) zwischen 1 nm und 20 nm dick sind.

3. Schneideinsatz nach Anspruch 1 oder 2, **dadurch gekennzeichnet, dass** die Wolframbasiert Schicht (30) zwischen 1 nm und 20 nm dick sind.

4. Schneideinsatz nach Anspruch 1 bis 3, **dadurch gekennzeichnet, dass** die Anzahl der Kupfer-basierten Schicht (29) geringer als 500 ist.

5. Schneideinsatz nach einem der vorhergehenden Ansprüchen, **dadurch gekennzeichnet, dass** das Lot (26) zwischen 1 µm und 10 µm dick ist.

6. Schneideinsatz (12) nach einem der vorhergehenden Ansprüchen, **dadurch gekennzeichnet, dass** das Lot (26) wenigstens zwei der Sequenzen (27) aufweist und zwischen den Sequenzen (27) eine Zwischenschicht (34) aus einer Legierung vorgesehen ist, wobei eines oder mehrere der Metalle Silber, Kupfer und Nickel zusammen ein Gewichtsanteil von wenigstens 75% an der Legierung bilden.

7. Schneideinsatz (12) nach einem der vorhergehenden Ansprüche, **dadurch gekennzeichnet, dass** das Lot (26) eine Deckschicht (32) aufweist, welche auf Titan oder Wolfram basiert und wobei die Deckschicht (32) dicker als 5 nm ist.

8. Schneideinsatz (12) nach Anspruch 7, **dadurch gekennzeichnet, dass** die Deckschicht (32) zwischen der Sequenz (27) und dem Grundkörper (25) und/oder zwischen der Sequenz (27) und dem Träger (24) vorgesehen ist.

9. Schneideinsatz (12) nach einem der vorhergehenden Ansprüche, **dadurch gekennzeichnet, dass** in den Ebenen der Wolfram-basierten Schicht (30) Inseln (31) aus Kupfer enthalten sind.

10. Kernbohrkrone (2) mit
einem Rohr (13) aus Stahl,
einer oder mehreren Aussparungen (15) an einer Stirnseite des Rohrs (13), jeweils einem Schneideinsatz (12) nach einem der vorhergehenden Ansprüche, dessen Träger (24) an dem Rohr (13) angeschweißt oder angelötet ist.

11. Herstellungsverfahren für einen Schneideinsatz, **gekennzeichnet durch** die Schritte:
Aufbringen eines Lots (26) durch alternierendes Abscheiden von Wolfram-basierten Schichten (30) und Kupfer-basierten Schichten (29) auf einem Träger (24) aus einem gesinterten Hartmetall und/oder auf einem Grundkörper (25) einer mit polykristallinen Diamanten versehenen Schneidplatte (22),
Verbinden der Schneidplatte (22) auf den Träger bei einer Löttemperatur zwischen 650 °C und 750 °C unter wenigstens teilweisen Aufschmelzen des Lots (26) zum Anbinden der Schneidplatte (22) an den Träger.

12. Herstellungsverfahren nach Anspruch 11 **dadurch gekennzeichnet, dass** sich der Löttemperatur Inseln (31) aus Kupfer in den Ebenen der Wolfram-basierten Schichten (30) ausbilden.

13. Herstellungsverfahren nach Anspruch 11 oder 12 **dadurch gekennzeichnet, dass** das Lot (26) mittels eines Sputterverfahrens aufgebracht wird.

## Claims

1. Cutting insert, in particular for a rotary tool, comprising
a support (24) of a sintered hard metal and
a cutting tip (22) having a base (25) of a sintered hard metal and having polycrystalline diamond (21) on a cutting surface (18) of the base,
**characterised by**
a solder that binds the base (25) of the cutting tip (22) to the support (24), the solder (26) having a sequence (27) of double layers (28) each consisting of a copper-based layer (29) and a tungsten-based layer (30) and the number of double layers (28) being greater than twenty.

2. Cutting insert according to claim 1, **characterised in that** the copper-based layer (29) is between 1 nm and 20 nm thick.

3. Cutting insert according to claim 1 or claim 2, **characterised in that** the tungsten-based layer (30) is between 1 nm and 20 nm thick.

4. Cutting insert according to claims 1 to 3, **characterised in that** the number of copper-based layers (29) is less than 500.

5. Cutting insert according to one of the preceding claims, **characterised in that** the solder (26) is between 1 µm and 10 µm thick.

6. Cutting insert (12) according to one of the preceding claims, **characterised in that** the solder (26) has at least two of the sequences (27) and an intermediate layer (34) of an alloy is provided between the sequences (27), one or more of the metals silver, copper and nickel together forming at least 75 % by weight of the alloy.

7. Cutting insert (12) according to one of the preceding claims, **characterised in that** the solder (26) has a top layer (32) based on titanium or tungsten, the top layer (32) being thicker than 5 nm.

8. Cutting insert (12) according to claim 7, **characterised in that** the top layer (32) is provided between the sequence (27) and the base (25) and/or between the sequence (27) and the support (24).

9. Cutting insert (12) according to one of the preceding claims, **characterised in that** islands (31) of copper are contained in the planes of the tungsten-based layer (30).

10. Core drill bit (2) comprising
a tube (13) of steel,
one or more recesses (15) on the end face of the tube (13) and
respective cutting inserts (12) according to one of the preceding claims, the supports (24) of which are welded or soldered to the tube (13).

11. Method of manufacturing a cutting insert, **characterised by** the steps:
applying a solder (26) by depositing tungsten-based layers (30) and copper-based layers (29) in alternation on a support (24) of a sintered hard metal and/or on a base (25) of a cutting tip (22) provided with polycrystalline diamonds and
joining the cutting tip (22) to the support at a soldering temperature of between 650°C and 750°C with at least partial melting of the solder (26) in order to bind the cutting tip (22) to the support.

12. Manufacturing method according to claim 11, **characterised in that** islands (31) of copper are formed in the planes of the tungsten-based layers (30) at the soldering temperature.

13. Manufacturing method according to claim 11 or claim 12, **characterised in that** the solder (26) is applied by means of sputtering.

## Revendications

1. Insert tranchant, en particulier pour un outil rotatif, comportant un support (24) constitué d'un métal dur fritté,
une plaquette tranchante (22) comportant un corps principal (25) constitué d'un métal dur fritté et un diamant polycristallin (21) sur une surface tranchante (18) du corps principal,
**caractérisé par** un métal d'apport assemblant le corps principal (25) de la plaquette tranchante (22) au support (24), dans lequel le métal d'apport (26) comporte une séquence (27) de doubles couches (28) respectivement constituées d'une couche à base de cuivre (29) et d'une couche à base de tungstène (30), et le nombre de doubles couches (28) est supérieur à vingt.

2. Insert tranchant selon la revendication 1, **caractérisé en ce que** la couche à base de cuivre (29) a une épaisseur comprise entre 1 nm et 20 nm.

3. Insert tranchant selon la revendication 1 ou 2, **caractérisé en ce que** la couche à base de tungstène (30) a une épaisseur comprise entre 1 nm et 20 nm.

4. Insert tranchant selon les revendications 1 à 3, **caractérisé en ce que** le nombre des couches à base de cuivre (29) est inférieur à 500.

5. Insert tranchant selon l'une des revendications précédentes, **caractérisé en ce que** le métal d'apport (26) a une épaisseur comprise entre 1 µm et 10 µm.

6. Insert tranchant (12) selon l'une des revendications précédentes, **caractérisé en ce que** le métal d'apport (26) comporte au moins deux des séquences (27) et une couche intermédiaire (34) constituée d'un alliage est prévue entre les séquences (27), dans lequel un ou plusieurs métaux parmi l'argent, le cuivre et le nickel forment ensemble une fraction pondérale d'au moins 75 % de l'alliage.

7. Insert tranchant (12) selon l'une des revendications précédentes, **caractérisé en ce que** le métal d'apport (26) comporte une couche extérieure (32) qui est à base de titane ou de tungstène et dans lequel la couche extérieure (32) a une épaisseur supérieure à 5 nm.

8. Insert tranchant (12) selon la revendication 7, **caractérisé en ce que** la couche extérieure (32) est prévue entre la séquence (27) et le corps principal (25) et/ou entre la séquence (27) et le support (24).

9. Insert tranchant (12) selon l'une des revendications précédentes, **caractérisé en ce que** des îlots (31) en cuivre sont contenus dans les plans de la couche à base de tungstène (30).

10. Trépan de carottage (2) comportant :
un tube (13) en acier,
un ou plusieurs évidements (15) sur une face frontale du tube (13),
respectivement un insert tranchant (12) selon l'une des revendications précédentes, dont le support (24) est soudé ou brasé sur le tube (13).

11. Procédé de fabrication d'un insert tranchant, **caractérisé par** les étapes consistant à :
appliquer un métal d'apport (26) en déposant de manière alternée des couches à base de tungstène (30) et des couches à base de cuivre (29) sur un support (24) constitué d'un métal dur fritté et/ou sur un corps principal (25) d'une plaquette tranchante (22) munie de diamants polycristallins,
assembler la plaquette tranchante (22) sur le support à une température de brasage comprise entre 650 °C et 750 °C en faisant fondre au moins en partie le métal d'apport (26) pour assembler la plaquette tranchante (22) au support.

12. Procédé de fabrication selon la revendication 11, **caractérisé en ce qu'**à la température de brasage, des îlots (31) en cuivre se forment dans les plans des couches à base de tungstène (30).

13. Procédé de fabrication selon la revendication 11 ou 12, **caractérisé en ce que** le métal d'apport (26) est appliqué au moyen d'un procédé de pulvérisation.
